# EUROPÄISCHE PATENTANMELDUNG

(11) **EP 4 768 115 A2**
(43) Veröffentlichungstag der Anmeldung: **01.07.2026**
(21) Anmeldenummer: 25226872.7
(22) Anmeldetag: 23.12.2025
(51) Int. Cl.: B01D 53/22, C25D 21/04

(54) **VERFAHREN UND ANLAGE ZUR GEWINNUNG UND NUTZUNG VON WASSERSTOFF**

(30) Priorität: 27.12.2024 DE 102024139792
(71) Anmelder: Kronenberger, Thomas, 63500 Seligenstadt (DE); Fuchs, Daniel, 74821 Lohrbach (DE); Spielmann, Patrick, 63768 Hösbach (DE); Hubert, Jelena, 63739 Aschaffenburg (DE)
(72) Erfinder: Kronenberger, Thomas, 63500 Seligenstadt (DE); Fuchs, Daniel, 74821 Lohrbach (DE); Spielmann, Patrick, 63768 Hösbach (DE); Hubert, Jelena, 63739 Aschaffenburg (DE)
(74) Vertreter: Keil & Schaafhausen Patentanwälte PartGmbB

(57) **Zusammenfassung**

Die Erfindung betrifft ein Verfahren und eine Anlage zur Gewinnung und Nutzung von Wasserstoff, insbesondere zur Nutzung von Wasserstoff im Bereich der Galvanik. Es wird eine klimapositive Galvanik mit dem Ziel vorgestellt, den CO₂-Fuß-abdruck eines Galvanikprozesses durch die Nutzung einer innovativen Kombination aus vorhandenen Verfahren und der Nutzung des bisher ungenutzten Gasgemisches (verunreinigtes H₂) zu reduzieren.

## Beschreibung

Die Erfindung betrifft ein Verfahren und eine Anlage zur Gewinnung und Nutzung von Wasserstoff, insbesondere zur Nutzung von Wasserstoff im Bereich der Galvanik.

In Galvanisierungsverfahren zur elektrolytischen Abscheidung von Veredelungsschichten auf Gegenständen, wie beispielsweise einer Verchromung oder einer Vernickelung, können als Prozessgase Wasserstoff und Sauerstoff entstehen. In herkömmlichen Anlagen werden die Prozessgase häufig mit der Abluft entsorgt. In solchen herkömmlichen Galvanisierungsverfahren wird ein sehr großer Anteil, teilweise bis zu 70 %, der für das Verfahren eingesetzten Energie für die Bildung der Prozessgase aufgebracht, während für die eigentliche elektrolytische Abscheidung von Veredelungsschichten einschließlich der Wärmeerzeugung lediglich ein erheblich kleinerer Anteil des Strombedarfs genutzt wird. Zusätzlich zu den Prozessgasen wird als weiteres unbeabsichtigtes Nebenprodukt Abwärme erzeugt.

In der WO 2009/124410 A1 wird daher vorgeschlagen, dass Prozessgase, die in einem geschlossenen Galvanisierungsreaktor in der Elektrolytlösung entstehen, von der Elektrolytlösung abgeschieden und in einem weiteren Schritt so aufbereitet werden, dass sie als Nebenprodukt weiterverwendet werden können. Zur Abtrennung des Wasserstoffes aus den Prozessgasen werden die Prozessgase nach der WO 2009/124410 A1 unter leichtem Überdruck einer oder mehreren Membranstufen aus einer wasserstoffselektiven porenfreien Silikonschicht, welche auf einem porösen Trägermaterial aufgebracht ist, oder einer für Wasserstoff hochselektiven und hochdurchlässigen Palladiumschicht zugeführt. Nebenprodukte, wie Wasserstoff, können dann gespeichert und verkauft oder zur Energierückgewinnung eingesetzt werden, um die Wirtschaftlichkeit des Galvanisierungsverfahrens zu verbessern.

DE 20 2019 000 928 U1 betrifft einen Wasserstoff-Sauerstoff-Trennreaktor zur Erfassung und Speicherung elektrochemisch erzeugter Gase. Eine energetische Verwertung wird nicht näher beschrieben. JP 2001/234398 A bezieht sich auf eine galvanische Anlage, bei der Prozessgase zur Energiebereitstellung genutzt werden sollen.

Aufgabe der vorliegenden Erfindung ist es, ein verbessertes Verfahren und eine entsprechend verbesserte Anlage zur Gewinnung und Nutzung von als Prozessgas entstehenden Wasserstoffs bereitzustellen.

Diese Aufgabe wird mit einem Verfahren mit den Merkmalen des Anspruchs 1 bzw. mit einer Anlage nach Anspruch 10 gelöst.

Ein Verfahren zur Gewinnung und Nutzung von Wasserstoff nach der vorliegenden Erfindung weist beispielsweise folgende Schritte auf:
a) Bereitstellen eines Wasserstoff enthaltenden Gasgemischs,
b) Einleiten des Gasgemischs in ein ein- oder mehrstufiges Gastrennmembran-Rack das wenigstens eine Hohlfasermembran oder eine andere zur Aufbereitung per selektiver Permeation geeignete passive Membran aufweist, die dazu geeignet ist, ein eines Wasserstoff enthaltendes Permeat von einem Retentat, welches aus einen Gasgemisch mit Wasserstoffanteil besteht, zu trennen,
c) Messung des Wasserstoffgehalts des Permeats,
d1) Speicherung des Permeats in einem Tank, sofern der in Schritt c) gemessene Wasserstoffgehalt des Permeats einen vorbestimmten Grenzwert erreicht oder übersteigt, oder
d2) Einleiten des Permeats in das Gastrennmembran-Rack und Wiederholung der Schritte b) und c), sofern der in Schritt c) gemessene Wasserstoffgehalt des Permeats den vorbestimmten Grenzwert unterschreitet, oder
d3) Einleiten des Permeats in ein nachgeschaltetes passives oder aktives Aufbereitungssystem, sofern der in Schritt c) gemessene Wasserstoffgehalt des Permeats den vorbestimmten Grenzwert auch nach Erreichen von maximal n Wiederholungen des Schrittes b) nicht erreicht wird, und anschließend Wiederholung von Schritt c), oder
d4) Zuführung des Permeats in eine Vorrichtung zur Umwandlung des Wasserstoffanteils in elektrische Energie und/oder thermische Energie,
e) Umwandlung des Wasserstoffs enthaltenden Permeats aus einem der Schritte d1) bis d4) in elektrische Energie.

Das Gasgemisch in Schritt a) kann beispielsweise zumindest teilweise das in einem Galvanisierungsverfahren anfallende Prozessgas sein. Hierbei kann ein industrieübliches Galvanikbecken beispielsweise mit einem speziell gekapselten Gasauffangsystem erweitert werden, um das abgeschiedene bzw. als Nebenprodukt entstehende Gasgemisch möglichst verlustfrei auffangen und der Aufbereitung möglichst hochkonzentriert zuführen zu können. Dabei kann der Galvanisierbehälter ein geschlossener Behälter sein, mit dem eine gezielte Abfuhr des Gasgemischs möglich ist. Zusätzlich oder alternativ können schwimmende luftgefüllte Kunststoffkugeln eingesetzt werden, die Wärme- und Verdunstungsverluste minimieren sowie eine verbesserte Abfuhr des Gasgemischs bewirken können.

Nach einem unabhängigen Erfindungsgedanken kann das Gastrennmembran-Rack ein Membranelement mit einem Permeatsammelrohr aufweisen, wobei Hohlfasermembranen als ein oder mehrere Bündel um das Permeatsammelrohr angeordnet sind. Dies kann entweder parallel zur Längsachse des Permeatsammelrohrs oder um das Permeatsammelrohr gewickelt erfolgen, vorzugsweise schraubenlinienförmig, besonders bevorzugt derart, dass sich die Schraubenlinien pro Wickellage überkreuzen. Beispielsweise kann das Gastrennmembran-Rack eine oder mehrere Kartuschen der in EP 3 328 521 B1 beschriebenen Art aufweisen. Das Membranelement kann optional mit einem nachgelagerten passiven oder aktiven Aufbereitungssystem verbunden werden und dann als einen Vorstufe dienen, sofern die geforderte Reinheit nicht durch das Membranelement selbst erreicht werden kann.

Zur Weiterverarbeitung des wasserstoffhaltigen Permeats sollte dieses eine möglichst hohe Reinheit haben. In Schritt d1) bzw. d2) bzw. d3) kann der Grenzwert des in Schritt c) gemessenen Wasserstoffgehalts beispielsweise wenigstens 95,0 %, insbesondere wenigstens 99,0 %, besonders bevorzugt wenigstens 99,95 %, betragen. Es hat sich als besonders vorteilhaft herausgestellt, wenn der Grenzwert so definiert ist, dass der Qualitätsstandard Wasserstoff 3.5, also eine Reinheit von 99,95%, oder Wasserstoff 5.0, also eine Reinheit von 99,9990%, oder Wasserstoff 7.0, also eine Reinheit von 99,999990 %, erreicht wird. Dies ist insbesondere für die Nutzung des Permeats, also des Wasserstoffs in Blockheizkraftwerken (meist zumindest Wasserstoff 3.5) oder in Brennstoffzellen (meist zumindest Wasserstoff 5.0) sinnvoll. Wenn das Permeat verbrannt werden soll, können auch schon deutlich geringere Konzentrationen ausreichend sein. Wie in Schritt d4) definiert ist es dabei nicht zwingend notwendig, das Permeat in einem Tank zu speichern, sondern dieses kann auch direkt weitergeleitet werden, beispielsweise zu einem Blockheizkraftwerk.

In Weiterbildung eines unabhängigen Erfindungsgedankens wird vor dem Schritt b) und/oder während des Schritts d2) und/oder während des Schritts d3) das in das Gastrennmembran-Rack einzuleitende Gas auf einen vorbestimmten Druck komprimiert. Mit anderen Worten kann das Gas z.B. gespeichert und mittels Kompressoren verdichtet werden, bis der ideale Prozessdruck zur Trennung des Wasserstoffs erreicht ist.

Nach einem weiteren unabhängigen Erfindungsgedanken erfolgt in Schritt e) die Umwandlung des Wasserstoff enthaltenden Permeats in elektrische Energie in einem Blockheizkraftwerk unter Verbrennung des Wasserstoffs oder ggf. methanisierten Permeats, in einer Brennstoffzelle und/oder in einer Gasturbine. Erfindungsgemäß kann die Energiegewinnung aus dem aufbereiteten Permeat in eine für Folgeprozesse passende Energieform unter Berücksichtigung eines maximalen Wirkungsgrades und deren Speicherung erfolgen. Je nach Art der Rückgewinnung kann der Grenzwert in Schritt c) entsprechend angepasst werden. In einem bevorzugten Beispiel kann auf eine zusätzliche Aufbereitung gänzlich verzichtet und das verunreinigte Gasgemisch der Rückgewinnungs-Einheit direkt zugeführt werden.

Die nach der Erfindung gewonnene Energie kann beispielsweise vornehmlich in den Sekundärstrang eines Galvanikprozesses einfließen oder alternativ Dritten bereitgestellt werden. Insbesondere kann die in Schritt e) erzeugte elektrische Energie in einem Prozess, insbesondere in einem Galvanikverfahren, eingesetzt werden, in dem ein Wasserstoff enthaltendes Gasgemisch entsteht, wobei dieser Prozess das Wasserstoff enthaltende Gasgemisch nach Schritt a) bereitstellt. Hierdurch entsteht ein Kreislaufsystem zur Gewinnung und Nutzung von Wasserstoff, also eine erfindungsgemäße Rezyklierung des Wasserstoffs.

Wenn das Bereitstellen eines Wasserstoff enthaltenden Gasgemischs nach Schritt a) durch einen Prozess, insbesondere ein Galvanikverfahren, erfolgt, ist häufig zusätzlich zu der aus Wasserstoff gewonnenen Energie weitere Energiezufuhr erforderlich. Vorzugsweise wird hierzu ganz oder teilweise regenerativ erzeugte elektrische Energie genutzt.

Nach einem weiteren unabhängigen Erfindungsgedanken kann, wenn das Bereitstellen eines Wasserstoff enthaltenden Gasgemischs nach Schritt a) durch einen Prozess, insbesondere ein Galvanikverfahren, erfolgt, diesem Prozess zusätzlich in Schritt e) anfallende thermische Energie zugeführt werden. Alternativ oder zusätzlich kann in diesem Prozess als Abwärme anfallende thermische Energie und/oder in Schritt e) anfallende thermische Energie zur Erzeugung elektrischer Energie verwendet werden. Hierdurch lässt sich das erfindungsgemäße Verfahren sehr energieeffizient betreiben.

Die Erfindung betrifft nach einem weiteren unabhängigen Gedanken eine Anlage zur Gewinnung und Nutzung von Wasserstoff, beispielsweise mittels eines Verfahrens der oben beschriebenen Art. Eine solche erfindungsgemäße Anlage kann eine erste Einrichtung, insbesondere einen gekapselten Behälter mit unterschiedlichen Abdichtungsgraden, in der unter Einsatz von elektrischer und/oder thermischer Energie ein Wasserstoff enthaltendes Gasgemisch anfällt, ein Gastrennmembran-Rack und ggf. eine nachgelagert weitere Aufbereitungsstufe zur Abtrennung von Wasserstoff aus dem Gasgemisch und eine zweite Einrichtung aufweisen, die zur Erzeugung von elektrischer und/oder thermischer Energie aus Wasserstoff eingerichtet ist. Zusätzlich kann die Anlage Leitungsmittel aufweisen, die dazu eingerichtet sind, das Wasserstoff enthaltende Gasgemisch von der ersten Einrichtung in das Gastrennmembran-Rack zu leiten. Ferner sind vorzugsweise die erste Einrichtung und die zweite Einrichtung derart miteinander verbunden, dass in der zweiten Einrichtung erzeugte elektrische und/oder thermische Energie der ersten Einrichtung zuführbar und dort nutzbar ist.

In der erfindungsgemäßen Anlage kann die erste Einrichtung einen Prozessbehälter aufweisen, der mit einem Deckel verschlossen ist, dessen Abdichtungsgrad über eine Druckregeleinheit variabel einstellbar ist. Der Deckel kann konisch nach oben verjüngt ausgebildet sein, wobei am Hochpunkt eine Abführung für das Wasserstoff enthaltende Gasgemisch vorgesehen ist.

Die erste Einrichtung der erfindungsgemäßen Anlage kann in einer Ausführungsform ein Galvanikbecken mit einer Anode und einer Kathode sein. Vorzugsweise ist die Kathode zumindest abschnittsweise mit einer Einhausung umgeben, um den entstehenden Wasserstoff konzentriert ableiten zu können.

Die Erfindung löst folglich verschiedene Aufgaben, deren Lösungen unabhängig voneinander als selbstständige Erfindungsgedanken anzusehen sind.

Dies betrifft zunächst eine Optimierung des Galvanikprozesses: Der derzeitige Prozesswirkungsgrad galvanischer Verfahren liegt bei lediglich 20-30 %, wobei ein großer Teil der eingesetzten Energie in Form von Wasserstoffbildung und Abwärme verloren geht. Eine erfindungsgemäße Lösung ist daher die energetische Optimierung des Prozesses durch gezielte Anpassung von Parametern wie Spannung, Stromdichte und Temperatur, durch Modifikation der Prozesschemie (z. B. Elektrolytzusammensetzung) sowie durch konstruktive Verbesserungen der Anlagentechnik, um den Energieverbrauch zu senken und die unerwünschte Wasserstofffreisetzung zu minimieren.

Eine weitere erfindungsgemäße Lösung ist die gezielte Gasabscheidung: Die entstehenden Prozessgase werden möglichst vollständig direkt an der Entstehungsstelle aufgefangen. Hierzu können die Elektrolytbäder mit speziellen Abdeckungen (Hauben oder Deckeln) versehen werden, wodurch das Abluftvolumen und damit das Entweichen des Wasserstoffs um ca. 90 % reduziert wird. Hierbei kann neben der Absaugung auch ein in-situ-Konzept angewandt werden: So können z. B. gaspermeable Membranen in unmittelbarer Nähe der Kathode direkt im Elektrolyten den Wasserstoff abtrennen. Voraussetzung dafür ist allerdings der Einsatz hochbeständiger Membranmaterialien, da diese direkt dem aggressiven Elektrolyten ausgesetzt sind.

Zusätzlich betrifft eine erfindungsgemäße Lösung die Gasaufbereitung: Das wasserstoffhaltige Prozessgas wird derzeit als Abfallprodukt betrachtet und ungenutzt über die Abluft abgeführt. Die Erfindung sieht dagegen vor, dieses Gas gezielt aufzubereiten, um Reinheit und Konzentration des enthaltenen Wasserstoffs so weit zu steigern, dass eine energetische Nutzung ermöglicht wird. Hierfür können verschiedene Verfahren zur Gasreinigung und Gasanreicherung eingesetzt werden, etwa Gastrennmembranen, nass-chemische Waschprozesse oder Druckwechseladsorption. Zu den erfindungsgemäßen Membrantechnologien zählen beispielsweise Polydimethylsiloxan-(PDMS) basierte Polymermembranen und zeolithische Keramikmembranen (etwa SAPO-34 auf Träger). Solche Membranen können Wasserstoff selektiv passieren lassen, müssen jedoch Feuchtigkeit und aggressiven Galvanikdämpfen standhalten. Keramische Membranen bieten zwar meist eine hohe chemische Stabilität, sind jedoch spröde, während polymerbasierte Membranen flexibler, aber unter hohem Druck potenziell weniger formstabil sind. Am Markt verfügbare H₂-Trennmodule wie die SEPURAN-Hohlfasermembran (Evonik) zeigen in Biogasanwendungen bereits gute Trennleistungen, jedoch sind galvaniktypische Prozessmedien (z. B. Chromsäure, Fluorwasserstoff) deutlich aggressiver. Neben Membranen kann auch die Druckwechseladsorption (PSA) eingesetzt werden, da damit extrem hohe Wasserstoff-Reinheiten bis 99,999 % erreichbar sind. Darüber hinaus können reversible Speicherverfahren (Absorption/Adsorption), etwa über Metallhydridbildung, eingesetzt werden, um den diskontinuierlich anfallenden Wasserstoff zwischenzuspeichern. Es wurde festgestellt, dass für eine effektive Abtrennung ein gewisser Mindestdruck sinnvoll sein kann. Dementsprechend kann bei Drücken bis zu 80 bar gearbeitet werden. Hierbei kann eine optionale Methanisierung des aufgefangenen und/oder abgereinigten und aufkonzentrierten Wasserstoffs sinnvoll sein.

Eine weitere erfindungsgemäße Lösung betrifft die energetische Nutzung und Speicherung: Der aufbereitete Wasserstoff kann entweder direkt energetisch genutzt oder zeitweise gespeichert werden; eine Abgabe an Dritte (z.B. benachbarte Betriebe) ist ebenfalls denkbar. Eine direkte Nutzung (ohne längere Zwischenspeicherung) wird bevorzugt, um den Gesamtwirkungsgrad maximal zu halten. Grundsätzlich kommen mehrere Nutzungswege in Betracht: der Betrieb einer Brennstoffzelle zur Stromerzeugung, die Einspeisung in ein Blockheizkraftwerk (BHKW) zur gekoppelten Strom- und Wärmeerzeugung oder die Verbrennung in einem Gasbrenner bzw. einer Gasturbine zur reinen Wärmebereitstellung.

Diese Lösungen bewirken jeweils einzeln und in Kombination, dass durch die gezielte Rückgewinnung und Aufbereitung von im Galvanikprozess entstehendem Wasserstoff mittels Gastrennmembranen dieser energetisch nutzbar gemacht wird, etwa durch Einspeisung in ein BHKW. Allein im Bereich Hartverchromung, einem Teilbereich der Galvanik, könnten in Deutschland jährlich bis zu 2.000 t Wasserstoff nutzbar gemacht und damit rund 18.000 t CO₂ sowie in erheblichem Maße Energiekosten eingespart werden.

Die vorliegende Erfindung betrifft unabhängig von der obigen Beschreibung bevorzugter Anwendungsfälle und deren Definition in den Ansprüchen im Wesentlichen vier voneinander unabhängige, aber miteinander kombinierbare Erfindungsgedanken im Zusammenhang mit der Gewinnung und Nutzung von Wasserstoff. Ein möglicher Anwendungsfall ist die Galvanik, die Erfindung ist aber nicht auf diesen Anwendungsfall beschränkt.

Diese vier voneinander unabhängige Erfindungsgedanken werden nachfolgend erläutert:

### 1. Energiezufuhr

Das Ziel dieses Erfindungsgedankens ist die Maximierung des Anteils an Sekundärenergie am Gesamtbedarf, der Erhalt einer stabilen und unterbrechungsfreien Energieversorgung (USV), der netzdienliche Ausgleich von Schwankungen durch Erneuerbare Energien im Verteilnetz sowie die Erhöhung der Sektorenkopplung, u.a. für Wärme, Mobilität und Strom. Sekundärenergie beschreibt dabei z.B. die maximale Rückgewinnung von Energie aus dem Kreislaufsystem, um die von außen zugeführte Primärenergie zu minimieren.

Es wird unterschieden zwischen elektrischer und thermischer Energiezufuhr. Die elektrische Energiezufuhr kann aus verschiedenen Energiequellen stammen, die auch miteinander kombinierbar sind. Dies schließt insbesondere folgende Optionen ein:
Die Primärenergie wird durch externe Energieversorgung beigestellt, z.B. Zukauf von grüner Energie. Es kann eine optimale Nutzung der Evolution des Energiemarktes (dynamische Stromtarife) mit Hilfe einer intelligenten Verbrauchsprognose erfolgen. Z.B. kann in Niedrig-Tarifphasen günstige grüne Primärenergie zugekauft werden, um diese für die Umwandlung in Wasserstoff und schließlich als Sekundärenergie zu nutzen.

Die maximale Ausnutzung der aus dem Prozess zurückgewonnenen Sekundärenergie (Rekuperation) kann unter Berücksichtigung einer unterbrechungsfreien und stetigen Energieversorgung erfolgen. Die Einspeisung überschüssiger Sekundärenergie in das öffentliche Stromnetz ist möglich. Alternativ oder zusätzlich ist auch die Nutzung des eigens produzierten Wasserstoffs zum einen aus überschüssiger Energie aus regenerativen Stromerzeugern sowie zum anderen aus den Aufbereitungsprozessen zur direkten Umwandlung in Sekundärenergie möglich, z.B. in einem Wasserstoff-BHKW.

Schließlich ist auch die Nutzung des eigens produzierten Wasserstoffes zum einen aus überschüssiger Energie aus regenerativen Stromerzeugern sowie zum anderen aus den Aufbereitungsprozessen zur Umwandlung in einen chemischen Brennstoff (Power-to-X) möglich, also beispielsweise die Erzeugung von E-Fuels, E-Methanol, E-Methan oder E-Wasserstoff.

Auch die thermische Energiezufuhr kann aus verschiedenen Energiequellen stammen, die auch miteinander kombinierbar sind. Dies schließt insbesondere folgende Optionen ein: Die Primärenergie wird durch externe Energieversorgung beigestellt, z.B. Zukauf von grüner Energie. Es erfolgt eine möglichst maximale Ausnutzung der aus dem Prozess zurückgewonnenen Sekundärenergie.

Wärmeenergie, die z.B. bei Galvanikprozess entsteht, kann durch Wärmetauscher verfügbar gemacht und genutzt werden, zum Beispiel für die Beheizung anderer Prozesse und Gebäude, oder zum Bereitstellen von Kälte über Adsorptionskältemaschinen. Wärmeenergie, die bei den Umwandlungsprozessen entsteht, kann in den Wärmekreislauf eingebracht und genutzt werden. Zudem kann Abwärme, die bei Umwandlung von Wasserstoff in Power to X abfällt, genutzt werden. Die Einspeisung überschüssiger Sekundärenergie in das öffentliche Fernwärmenetz ist ebenfalls möglich.

### 2. Galvanik

Das Ziel dieses Erfindungsgedankens ist es, technologisch vorhandene Verfahren an das Effizienzlimit mit Fokus auf minimalen Energiebedarf zu optimieren. Dabei soll auf bestehende Technologie gesetzt werden und aus einer Optimierung aller am Gesamtprozess beteiligten Betriebsmittel sowie ggf. zusätzliche indirekte Maßnahmen eine Reduzierung des Energiebedarfes erlangt werden.

Die Optimierung der Betriebsmittel kann dabei folgende Maßnahmen einzeln oder in Kombination aufweisen: Eine Verstärkung der Umwälzleistung in der Galvanik bewirkt eine bessere Verchromung. Es können industrieübliche Galvanikbecken mit speziell gekapseltem Gasauffangsystem erweitert werden, um das als Nebenprodukt entstehende, abgeschiedene Gasgemisch nahezu verlustfrei auffangen und der Aufbereitung möglichst hochkonzentriert zuführen zu können, wodurch auch die Belastung der Mitarbeiter reduziert wird. Durch den Deckel bzw. das geschlossene System kann auch die Umwälzleistung gesteigert und somit die Verchromung verbessert werden. Dies kann in der Reaktortechnologie z.B. durch einen gekapselten Behälter oder einen geschlossenen Behälter mit unterschiedlichen Abdichtungsgradeneinen erreicht werden, mit dem eine gezielte Abfuhr des Gasgemischs möglich ist. Ein unabhängiges erfindungsgemäßes Beispiel ist ein geschlossenes Galvanikbecken zur gezielten Abfuhr des entstehenden Wasserstoffes. Zusätzlich oder alternativ kann nach einer weiteren Erfindungsidee ein Gasleitsystem, beispielsweise ein Textil- oder Kunststoffmantel (spezielle Membranen und -techniken), zur gezielten Gasführung an der Kathode vorgesehen sein. Eine weitere unabhängige Erfindungsidee ist die Adsorption des Wasserstoffes direkt im Elektrolyten durch geeignete Absorbenzien, wie metal organic frameworks - MOFs, Zeolithe und/oder Metallhydride. Alternativ oder zusätzlich können schwimmende luftgefüllte Kunststoffkugeln eine Reduzierung von Wärme- und Verdunstungsverlusten sowie eine verbesserte Abfuhr des Gasgemischs bewirken. Eine weitere Maßnahme ist eine flexible und optimale Einstellung des Anodenabstands zur Reduzierung der Zellspannung. Auch die Optimierung der Anodenform zur Vermeidung von Überbeschichtung und einer dennoch gleichmäßigen Beschichtung des Bauteils steigern die Effizienz der Galvanik. Frequenzgeregelte Pumpenmotoren zur flexiblen Steuerung des Prozesses dienen ebenfalls dem Ziel der Reduktion der Energiekosten.

Neben diesen direkten Betriebsmitteln der Galvanik können auch indirekte Maßnahmen zu dem gewünschten Ziel führen. Das schließt beispielsweise die Verwendung loT-fähiger Betriebsmittel und Messtechnik zur Generierung eines digitalen Zwillings ein. Die Nutzung der angefallenen Messdaten kann zur intelligenten Steuerung der Prozesse / des Energiebedarfes verwendet werden. Weiter können Predictive Maintenance Ansätze oder weitere Kl-gestützte Ansätze zu einer Effizienzsteigerung, wie z. B. durch die frühzeitige Erkennung von Prozessstörungen und Reduzierung von Stillstandzeiten eingesetzt werden. Durch Smart Metering lassen sich dynamische Stromtarife zur Reduzierung der Energiekosten sowie zur netzdienlichen Entlastung des Verteilernetzes nutzen. Zudem bietet der Einsatz optimierter Betriebsmittel Vorteile, wie z.B. eine Erhöhung des Automatisierungsgrads, eine Intelligente Messtechnik (IoT), Schaltnetzteile und/oder gekühlte Kupferleitungen.

### 3. Aufbereitung eines wasserstoffhaltigen Gasgemischs

Das wesentliche Ziel dieses Erfindungsgedankens liegt darin, das beispielsweise in der Galvanik gewonnene wasserstoffhaltige Gasgemisch, das dort als Abfallprodukt anfällt, durch geeignete Aufbereitungsverfahren nachgelagerten Systemen in der erforderlichen Reinheit, Konzentration und (Partial-)Druck zur Nutzung bereitzustellen.

Grundgedanke dieses Aspekts der Erfindung ist es, dass bei vielen industriellen Vorgängen Wasserstoff entsteht, allerdings oft als Gemisch mit anderen Gasen, die sich mit nur großem energetischem Aufwand aufarbeiten lassen. Reinigungsverfahren sind aufwendig, teuer und führen häufig nicht zur gewünschten Reinheit des Wasserstoffs. So kann beispielsweise schon eine geringe Menge Kohlenmonoxid weitere Verfahrensschritte hemmen. Es "vergiftet", sprich inaktiviert, viele Katalysatoren mit Edelmetallen. Daher sind kostspielige Reinigungsverfahren erforderlich, um den Wasserstoff vor der Speicherung zu isolieren. Im Falle der Hartverchromung ist Wasserstoff unter anderem bei der Verchromung mit Chrom(VI)-Verbindungen verunreinigt. Genauso können bei anderen galvanischen Oberflächenbehandlungen auch andere Verunreinigungen entstehen. Zur Weiterverarbeitung des wasserstoffhaltigen Gasgemisches z.B. in einer Brennstoffzelle muss meist mindestens der Qualitätsstandard Wasserstoff 3.5 erreicht werden, der einer Reinheit von 99,95 % entspricht. Entsprechend hochwertig muss also die Abscheidung des Wasserstoffs sein.

Die Aufbereitung kann erfindungsgemäß u.a. durch folgende Technologien erfolgen: durch die Membrantechnologie einschließlich der Verwendung einer Hohlfasermembran und/oder einer Folienmembran, z.B. Palladiummembranen, Polymermembranen oder Graphen-Membranen, durch Abscheidung von Wasserstoff auf Basis der Funktionsweise eines Molekularsiebs, durch klassische nasschemische Verfahren, durch PSA - Pressure Swing Adsorption (PEM Druckwechseladsorption), durch Adsorption direkt im Elektrolyten durch geeignete Adsorbenzien, z.B. MOFs, Metallhydride oder Zeolithe, durch PEM/Verfahren mit Siliziumoxid-Trockenmittel, durch electrochemical hydrogen separation (EHS), d.h. Wasserstoff wird durch Anlegen von Spannung an PEM durch die Membran transportiert und der Wasserstoff wird so gereinigt und kann verdichtet werden, durch Bororganische Verbindungen, durch chemische Speicher und/oder durch einen Sabatier- Prozess.

Wesentlich ist, dass bei vielen industriellen Applikationen Wasserstoff als Gemisch mit anderen Gasen entsteht. Der vorliegende Erfindungsgedanke ist daher auf einzelne Anwendungen erweiterbar und ist somit ohne Einschränkung auf das Beispiel Galvanik universell zu betrachten.

### 4. Umwandlung von Wasserstoff in geeignete Energieform

Bei diesem Erfindungsgedanken ist das Ziel eine Energiegewinnung aus dem, beispielsweise wie oben beschrieben aufbereiteten wasserstoffhaltigen Gas in eine für Folgeprozesse passende Energieform unter Berücksichtigung eines maximalen Wirkungsgrades und deren Speicherung. Die daraus gewonnene Energie soll vornehmlich in den Sekundärstrang, beispielsweise eines Galvanikprozesses, einfließen, also zur Abdeckung der Grundlast des Erzeugers genutzt werden, oder alternativ Dritten bereitgestellt werden. Nach der Erfindung kann zusätzlich oder alternativ auch elektrische Energie aus regenerativen Quellen direkt oder indirekt genutzt werden.

Direkte Nutzung der elektrischen Energie erfolgt beispielsweise durch Verwendung der eigens erzeugten (grünen) elektrischen Energie im Galvanikprozess, durch Deckung des Eigenstrombedarfes (Peripherie) und/oder durch Überschusseinspeisung in das öffentliche Stromnetz. Eine indirekte Nutzung der elektrischen Energie kann durch Umwandlung in Wasserstoff durch Elektrolyse, beispielsweise eine PEM-Elektrolyse oder eine alkalische Membran-Elektrolyse erreicht werden, durch Speicherung von Wasserstoff und/oder durch Elektrifizierung von Wasserstoff. Letzteres kann z.B. in einem BHKW erfolgen, das reinen Wasserstoff oder Biogas nach Methanisierung des Wasserstoffs verwendet, beispielsweise durch Wabenmethanisierung oder Dreiphasenmethanisierung. Eine Elektrifizierung von Wasserstoff ist auch mittels einer Brennstoffzelle möglich oder in einer sogenannten HyFlex-Power Gasturbine, die sowohl 0 bis 100 % Wasserstoff als auch 0 bis 100 % Erdgas zur Erzeugung von Strom und Wärme nutzen kann.

Der aus der Aufbereitung gewonnene Wasserstoff kann indirekt mit dem aus elektrischer Sekundärenergie gewonnenen Wasserstoff elektrifiziert werden, direkt in das entstehende Wasserstoff-Verteilnetz eingespeist oder anderweitig verwendet werden. Grundsätzlich erzeugt die mittels des gewonnenen Prozessgas-Wasserstoffs erzeugte und in dem Galavanikprozess eingesetzte Sekundärenergie erfindungsgemäß ihrerseits wieder Prozessgas mit Wasserstoff, so dass eine Rezyklierung des Wasserstoffs erfolgt.

Die thermische Energie bzw. Abwärme aus oben genannten Umwandlungen oder dem Galvanikprozess kann intern über Wärmetauscher genutzt, in das Fernwärmenetz eingespeist der anderweitig verwendet werden.

Nachfolgend wird die Erfindung unter Bezugnahme auf ein Ausführungsbeispiel und die beigefügte Zeichnung näher erläutert. Es zeigen schematisch:
- Figur 1: ein Blockschaltbild der Stoff- und Energieströme in einer Anlage nach einer Ausführungsform der vorliegenden Erfindung,
- Figur 2: ein Blockschaltbild zur Aufbereitung von Wasserstoff nach einer Ausführungsform der vorliegenden Erfindung, und
- Figur 3: einen galvanischen Prozessbehälter nach einer Ausführungsform der vorliegenden Erfindung.

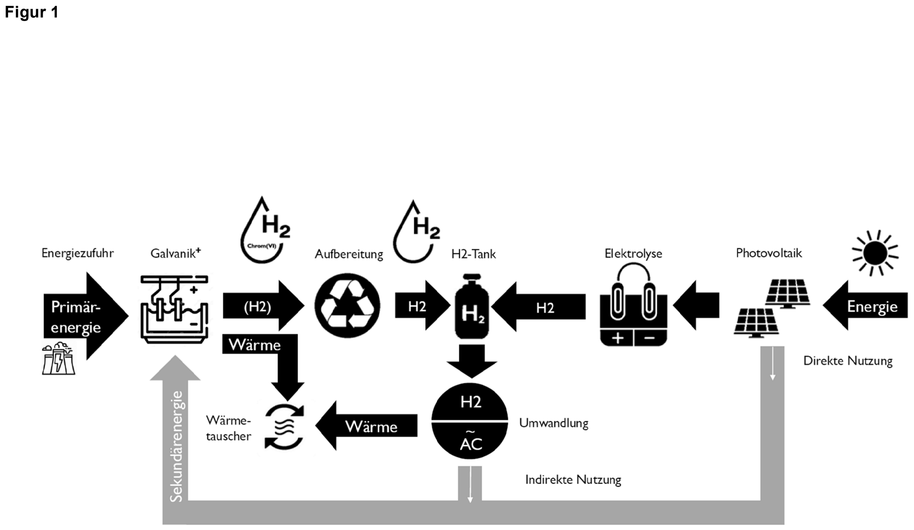

In Figur 1 ist exemplarisch für eine Anlage bzw. ein Verfahren nach der vorliegenden Erfindung dargestellt, wie in einem Prozess, hier beispielsweise Galvanik, anfallende wasserstoffhaltige Gase effizient genutzt werden können. Zum Betrieb des Galvanikverfahrens wird diesem Primärenergie zugeführt. Während der Galvanisierung entsteht u.a. ein wasserstoffhaltiges Gasgemisch, beispielsweise mit Chrom (VI) verunreinigt, das aufgefangen oder abgesaugt und einer Aufbereitung unterzogen wird. Der dabei auf das geforderte Reinheitsniveau aufbereitete, anfallende Wasserstoff kann in einem Tank zwischengelagert werden. Der Wasserstoff kann dann in elektrische Energie umgewandelt werden, die als Sekundärenergie dem Galvanikverfahren zugeführt wird und dort die Primärenergie jedenfalls teilweise ersetzen kann. Auch die während der Galvanisierung und/oder während der Umwandlung von Wasserstoff in elektrische Energie entstehende Wärme kann genutzt werden, beispielsweise zur Erzeugung elektrischer Energie und/oder als thermische Energie dem Galvanikverfahren zugeführt werden (z.B. über Wärmetauscher).

Der Einsatz von Primärenergie lässt sich dadurch weiter reduzieren, dass durch erneuerbare Energiequellen elektrische Energie entweder direkt als Sekundärenergie verwendet wird, oder zunächst durch Elektrolyse zur Erzeugung von Wasserstoff genutzt wird, der dann zusammen mit dem aus der Galvanik stammenden, aufbereiteten Wasserstoff wie oben beschrieben in elektrische und thermische Energie umgewandelt und dem Prozess als Sekundärenergie zugeführt wird.

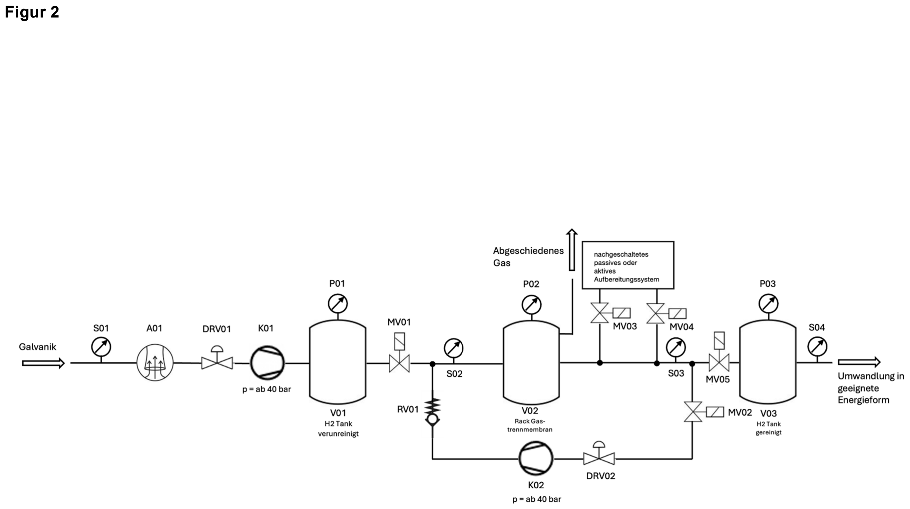

Die Aufbereitung wasserstoffhaltiger Gase ist in Figur 2 im Detail dargestellt. In Figur 2 bezeichnen S01, S02, S03 und S04 Mess-Stellen mit einer Sensorik zur Messung der Reinheit des Wasserstoffs. A01 bezeichnet eine Absaugung. Weiter sind mit MV01, MV02, MV03, MV04 und MV05 ansteuerbare Ventile, beispielsweise Magnetventile bezeichnet, während DRV01 und DR02 jeweils Druckregelventile und RV01 ein Rückschlagventil bezeichnen. Kompressoren sind mit KK01 bzw. KK02 bezeichnet. V01 und V03 bezeichnen Tanks zur Lagerung von Wasserstoff und V02 bezeichnet ein Rack mit wenigstens einer Gastrennmembran, wobei das Rack der Gastrennmembran V02 einzelne Filtermodule aufweisen kann, die je nach Verwendungszweck seriell oder parallel geschaltet, als auch ausgetauscht werden können. P01, P02 und P03 sind Druckmessgeräte zur Anzeige der Drücke.

Das Wasserstoffgemisch wird durch eine Absaugung A01, beispielsweise aus dem Galvanikprozess, entnommen, in einem Kompressor KK01 komprimiert und in einem Tank V01 bis zu einem geeigneten Druck zwischengespeichert. Sobald der ideale Prozessdruck zur Trennung des Wasserstoffs erreicht ist, öffnet das Magnetventil MV01 und das Gasgemisch (Feed) strömt mit einer definierten Durchflussgeschwindigkeit durch das Gastrennmembran-Rack V02. Am Ausgang des Racks wird die Reinheit des Permeats (Wasserstoff/-gemisch) mit einer Messtechnik zur Messung der Wasserstoff-Reinheit S03 geprüft. Das abgeschiedene Gas (Retentat) wird in einem eigenen Prozessstrang abgeführt und ordnungsgemäß entsorgt.

Sofern die gewünschte Reinheit am Messsystem S03 nicht erreicht wurde, öffnet das Magnetventil MV02, Magnetventil MV05 bleibt geschlossen, und das Gasgemisch wird durch den Kompressor KK02 wieder bis zum geeigneten Betriebsdruck komprimiert. Dieser Prozess wird n Zyklen durchgeführt, mit dem Ziel, dass das Messsystem S03 am Ausgang des Reinigungskreislaufes die gewünschte Wasserstoffqualität misst. Wird die gewünschte Wasserstoffqualität nach n Zyklen nicht erreicht, kann das Gasgemisch in ein nachgelagertes passives oder aktives Aufbereitungssystem eingeleitet werden, indem die Magnetventile MV03 und MV04 geöffnet werden. Dieser Prozess findet so lange statt, bis das Messsystem S03 am Ausgang des Gastrennmembran-Racks die gewünschte Wasserstoffqualität misst.

Ein vordefinierter Grenzwert ist dabei beispielsweise eine Reinheit des Wasserstoffs von 99,95 % oder 99,999990 %. Sobald die gewünschte Wasserstoffqualität erreicht ist, öffnet das Magnetventil MV05 und Ventil MV02 schließt, sodass der aufbereitete Wasserstoff im Tank (V03) gespeichert werden kann und je nach Bedarf genutzt wird.

Zusammengefasst kann der erfindungsgemäße Prozess beispielsweise wie folgt ablaufen: Der Wasserstoff wird durch eine geeignete Einrichtung an der Kathode gesammelt und steigt dadurch konzentriert auf. Durch das geschlossene Becken wird eine Verdünnung des Gemisches durch die Umgebungsluft verhindert. Das Gasgemisch kann somit unverdünnt über die Absaugung (A01) der Aufbereitung zugeführt werden. Die Aufbereitung kann durch eine Technologie nach dem Funktionsprinzip eines Molekularsiebes erfolgen. Es kann beispielsweise eine Membrantechnologie (V02) verwendet werden. Hierbei wird das Gemisch verdichtet (KK01). Der Wasserstoff diffundiert durch den Differenzdruck durch das Molekularsieb. Größere Moleküle verbleiben im Retentat. Durch einen Sensor wird die Qualität des aufbereiteten Wasserstoffes überwacht (S03). Alternativ können auch andere Technologien zum Einsatz kommen. Eine Aufbereitung des Wasserstoffes ist ebenfalls über ein EHS-Verfahren, eine Druckwechseladsorption, eine Temperaturwechseladsorption oder über nasschemische Verfahren denkbar.

Weiterhin kann der Wasserstoff direkt im Elektrolyten durch geeignete Adsorbenzien aufgenommen werden. Die Adsorbenzien werden zur Regeration aus dem Galvanikbecken geführt. Bei der Regeneration wird der gebundene Wasserstoff frei. Gegebenenfalls erfolgt anschließend eine Aufbereitung mit den zuvor erläuterten Verfahren. Nach der Aufbereitung kann der Wasserstoff in einem Tank gepuffert werden, bevor er der späteren Verwendung zugeführt wird.

Die vorstehende Beschreibung nimmt beispielhaft Bezug auf ein Galvanikverfahren und die Aufbereitung und Nutzung von Wasserstoff. Die Erfindung ist aber nicht auf diese Beispiele beschränkt. Vielmehr sind sämtliche Prozesse von der Erfindung umfasst, in denen Gase oder Gasgemische entstehen, die speicherbar und ggf. nach einer Aufbereitung in elektrische und/oder thermische Energie umwandelbar sind. Dies schließt auch Prozesse ein, bei denen statt Wasserstoff andere Gase entsprechend nutzbare Gase entstehen

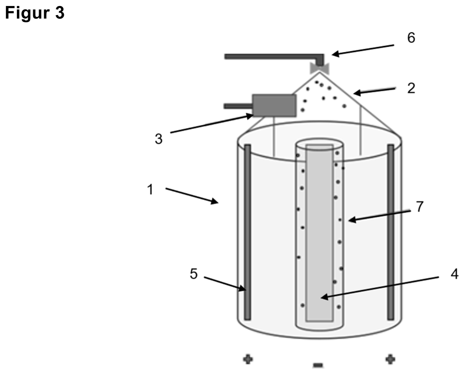

Figur 3 zeigt vereinfacht ein Beispiel eines galvanische Prozessbehälters 1, der mit einem Deckel 2 verschlossen ist, dessen Abdichtungsgrad über eine Druckregeleinheit 3 variabel eingestellt werden kann. In dem Prozessbehälter 1 sind in an sich bekannter Weise eine Kathode 4 und Anoden 5 vorgesehen. Die Funktion des Deckels 2 ist die frühzeitige Separierung und erster Aufkonzentrierung der Prozessgase, um den nachfolgenden Energieaufwand zur Komprimierung zu reduzieren und somit den Wirkungsgrad der Anlage zu erhöhen. Dieser Deckel 2 weist zur gezielten Ableitung der separierten und aufkonzentrierten Prozessgase eine konische Geometrie auf, am Hochpunkt eine gezielte Abführung 6 und Weiterleitung der Prozessgase erfolgt. Des Weiteren werden die an der Kathode 4 entstehenden Prozessgase durch eine spezielle Kathoden-Einhausung 7 gezielt dem Deckel 2 zugeführt. Diese Abtrennung vom Elektrolyten schafft einen Katholytraum. In gleicher Weise kann auch die Anode 5 zumindest abschnittsweise mit einer Einhausung (nicht gezeigt), insbesondere zur Abtrennung vom Elektrolyten und Ausbildung eines Anolytraumes, ausgebildet sein.

## Patentansprüche

1. Verfahren zur Gewinnung und Nutzung von Wasserstoff mit zumindest folgenden Schritten:
a) Bereitstellen eines Wasserstoff enthaltenden Gasgemischs,
b) Einleiten des Gasgemischs in ein ein- oder mehrstufiges Gastrennmembran-Rack das wenigstens eine Hohlfasermembran oder eine andere zur Aufbereitung per selektiver Permeation geeignete passive Membran aufweist, die dazu geeignet ist, ein Wasserstoff enthaltendes Permeat, welches aus einem Gasgemisch mit Wasserstoffanteil besteht, von einem Retentat zu trennen,
c) Messung des Wasserstoffgehalts des Permeats,
d1) Speicherung des Permeats in einem Tank, sofern der in Schritt c) gemessene Wasserstoffgehalt des Permeats einen vorbestimmten Grenzwert erreicht oder übersteigt, oder
d2) Einleiten des Permeats in das Gastrennmembran-Rack und Wiederholung der Schritte b) und c), sofern der in Schritt c) gemessene Wasserstoffgehalt des Permeats den vorbestimmten Grenzwert unterschreitet, oder
d3) Einleiten des Permeats in ein nachgeschaltetes passives oder aktives Aufbereitungssystem, sofern der in Schritt c) gemessene Wasserstoffgehalt des Permeats den vorbestimmten Grenzwert auch nach Erreichen von maximal n Wiederholungen des Schrittes b) nicht erreicht wird, und anschließend Wiederholung von Schritt c) oder der Schritte b) und c), oder
d4) Zuführung des Permeats in eine Vorrichtung zur Umwandlung in elektrische Energie und/oder thermische Energie,
e) direkte oder indirekte Umwandlung des Wasserstoffs enthaltenden Permeats aus einem der Schritte d1) bis d4) in elektrische Energie.

2. Verfahren nach Anspruch 1, **dadurch gekennzeichnet, dass** das Gasgemisch in Schritt a) zumindest teilweise das in einem Galvanisierungsverfahren anfallende Prozessgas ist.

3. Verfahren nach Anspruch 1 oder 2, **dadurch gekennzeichnet, dass** in Schritt b) das Gastrennmembran-Rack ein Membranelement mit einem Permeatsammelrohr aufweist, wobei Hohlfasermembranen als ein oder mehrere Bündel um das Permeatsammelrohr angeordnet sind, entweder parallel zur Längsachse des Permeatsammelrohrs oder um das Permeatsammelrohr gewickelt, vorzugsweise schraubenlinienförmig, besonders bevorzugt derart, dass sich die Schraubenlinien pro Wickellage überkreuzen.

4. Verfahren nach einem der Ansprüche 1 bis 3, **dadurch gekennzeichnet, dass** in Schritt d) der Grenzwert des in Schritt c) gemessenen Wasserstoffgehalts wenigstens 95,0 %, insbesondere wenigstens 99,0 %, besonders bevorzugt wenigstens 99,95 %, beträgt.

5. Verfahren nach einem der Ansprüche 1 bis 4, **dadurch gekennzeichnet, dass** vor dem Schritt b) und/oder während des in Schritts d2) das in das Gastrennmembran-Rack einzuleitende Gas auf einen vorbestimmten Druck komprimiert wird.

6. Verfahren nach einem der Ansprüche 1 bis 5, **dadurch gekennzeichnet, dass** in Schritt e) die direkte Umwandlung des Wasserstoff enthaltenden Permeats in elektrische Energie in einem Blockheizkraftwerk unter Verbrennung des ggf. methanisierten Permeats, in einer Brennstoffzelle und/oder in einer Gasturbine erfolgt.

7. Verfahren nach einem der Ansprüche 1 bis 6, **dadurch gekennzeichnet, dass** eine Recyklierung des Wasserstoffs stattfindet, indem die in Schritt e) erzeugte elektrische Energie in einem Prozess, insbesondere in einem Galvanikverfahren, eingesetzt wird, in dem ein Wasserstoff enthaltendes Gasgemisch entsteht, wobei dieser Prozess das Wasserstoff enthaltende Gasgemisch nach Schritt a) bereitstellt.

8. Verfahren nach einem der Ansprüche 1 bis 7, **dadurch gekennzeichnet, dass** das Bereitstellen eines Wasserstoff enthaltenden Gasgemischs nach Schritt a) durch einen Prozess, insbesondere ein Galvanikverfahren, erfolgt, dem zusätzlich regenerativ erzeugte elektrische Energie zugeführt wird.

9. Verfahren nach einem der Ansprüche 1 bis 8, **dadurch gekennzeichnet, dass** das Bereitstellen eines Wasserstoff enthaltenden Gasgemischs nach Schritt a) durch einen Prozess, insbesondere ein Galvanikverfahren, erfolgt, dem zusätzlich in Schritt e) anfallende thermische Energie zugeführt wird, und/oder dass in diesem Prozess als Abwärme anfallende thermische Energie und/oder in Schritt e) anfallende thermische Energie zur Erzeugung elektrischer Energie verwendet wird.

10. Anlage zur Gewinnung und Nutzung von Wasserstoff, insbesondere mittels eines Verfahrens nach einem der vorhergehenden Ansprüche, wobei die Anlage eine erste Einrichtung, insbesondere einen gekapselten Behälter mit unterschiedlichen Abdichtungsgraden, in der unter Einsatz von elektrischer und/oder thermischer Energie ein Wasserstoff enthaltendes Gasgemisch anfällt, ein Gastrennmembran-Rack zur Abtrennung von Wasserstoff aus dem Gasgemisch und eine zweite Einrichtung aufweist, die zur Erzeugung von elektrischer und/oder thermischer Energie aus Wasserstoff eingerichtet ist, **dadurch gekennzeichnet, dass** die Anlage weiter Leitungsmittel aufweist, die dazu eingerichtet sind, das Wasserstoff enthaltende Gasgemisch von der ersten Einrichtung in das Gastrennmembran-Rack zu leiten, und dass die erste Einrichtung und die zweite Einrichtung derart miteinander verbunden sind, dass in der zweiten Einrichtung erzeugte elektrische und/oder thermische Energie der ersten Einrichtung zuführbar ist.

11. Anlage nach Anspruch 10, **dadurch gekennzeichnet, dass** die erste Einrichtung einen Prozessbehälter (1) aufweist, der mit einem Deckel (2) verschlossen ist, dessen Abdichtungsgrad über eine Druckregeleinheit (3) variabel einstellbar ist.

12. Anlage nach Anspruch 11, **dadurch gekennzeichnet, dass** sich der Deckel (2) konisch nach oben verjüngt, wobei am Hochpunkt eine Abführung (6) für das das Wasserstoff enthaltende Gasgemisch vorgesehen ist.

13. Anlage nach einem der Ansprüche 10 bis 12, **dadurch gekennzeichnet, dass** die erste Einrichtung ein Galvanikbecken mit wenigstens einer Anode (5) und wenigstens einer Kathode (4) ist.

14. Anlage nach Anspruch 13, **dadurch gekennzeichnet, dass** die Kathode (4) zumindest abschnittsweise mit einer Einhausung, insbesondere zur Abtrennung vom Elektrolyten und Ausbildung eines Katholytraumes, umgeben ist.

15. Anlage nach Anspruch 13 oder 14, **dadurch gekennzeichnet, dass** die Anode (5) zumindest abschnittsweise mit einer Einhausung, insbesondere zur Abtrennung vom Elektrolyten und Ausbildung eines Anolytraumes, umgeben ist.
